# EUROPÄISCHE PATENTSCHRIFT

(11) **EP 3 891 464 B1**
(45) Veröffentlichungstag und Bekanntmachung des Hinweises auf die Patenterteilung: **15.11.2023**
(21) Anmeldenummer: 19828212.1
(22) Anmeldetag: 06.12.2019
(51) Int. Cl.: G01B 11/06, G01N 21/3581, G01N 21/95, G01S 7/41, G01S 13/88, G01S 13/90

(54) **MESSSYSTEM UND VERFAHREN ZUR VERMESSUNG EINES MESSOBJEKTES, INSBESONDERE EINES KUNSTSTOFF-PROFILS**
MEASUREMENT SYSTEM AND METHOD FOR MEASURING A MEASUREMENT OBJECT, IN PARTICULAR A PLASTIC PROFILE
SYSTÈME DE MESURE ET PROCÉDÉ DE MESURE D'UN OBJET DE MESURE, EN PARTICULIER D'UN PROFILÉ EN MATIÈRE PLASTIQUE

(30) Priorität: 07.12.2018 DE 102018131370
(43) Veröffentlichungstag der Anmeldung: 13.10.2021
(73) Patentinhaber: iNOEX GmbH Innovationen und Ausrüstungen für die Extrusionstechnik, 49324 Melle (DE)
(72) Erfinder: KLOSE, Ralph, 49324 Melle (DE)
(74) Vertreter: Bremer, Ulrich
(86) Internationale Anmeldenummer: PCT/DE2019/101055
(87) Internationale Veröffentlichungsnummer: WO 2020/114561

(56) Entgegenhaltungen:
- DE-A1-102016 111 044
- US-A1- 2014 070 111
- JUBO HAO ET AL: "Three-Dimensional Imaging of Terahertz Circular SAR with Sparse Linear Array", SENSORS, Bd. 18, Nr. 8, 31. Juli 2018 (2018-07-31), Seite 2477, XP055673480, CH ISSN: 1424-8220, DOI: 10.3390/s18082477
- BACCOUCHE BESSEM ET AL: "Three-Dimensional Terahertz Imaging With Sparse Multistatic Line Arrays", IEEE JOURNAL OF SELECTED TOPICS IN QUANTUM ELECTRONICS, IEEE SERVICE CENTER, PISCATAWAY, NJ, US, Bd. 23, Nr. 4, 1. Juli 2017 (2017-07-01), Seiten 1-11, XP011644701, ISSN: 1077-260X, DOI: 10.1109/JSTQE.2017.2673552 [gefunden am 2017-04-05]
- KNIFFIN GABRIEL ET AL: "Parabolic Equation Methods for Terahertz 3-D Synthetic Aperture Imaging", IEEE TRANSACTIONS ON TERAHERTZ SCIENCE AND TECHNOLOGY, IEEE, PISCATAWAY, NJ, USA, Bd. 6, Nr. 6, 1. November 2016 (2016-11-01), Seiten 784-792, XP011627182, ISSN: 2156-342X, DOI: 10.1109/TTHZ.2016.2602544 [gefunden am 2016-11-01]

## Beschreibung

Kunststoff-Produkte werden nach ihrer Herstellung im Allgemeinen auf Wanddicken überprüft; insbesondere bei einer Extrusion können sich Parameter des Kunststoff-Produktes ändern und Verformungen des noch weichen Kunststoffmaterials auftreten sowie Fehlstellen oder Lunker ausgebildet werden. Es ist hierbei bekannt, aus einem Kunststoffmaterial ausgebildete Messobjekte nach ihrer Herstellung durch ein Terahertz-Messverfahren zu vermessen. Hierbei wird im Allgemeinen ein THz-Sendestrahl senkrecht auf das jeweilige Messobjekt eingestrahlt und an Grenzflächen teilweise reflektiert wird, so dass aus der zu einem THz-Transceiver zurückgestrahlten Reflexionsstrahlung die Grenzflächen als Messpeaks ermittelt werden können; somit ist eine Ermittlung der Schichtdicken, insbesondere auch mehrerer Schichtdicken direkt aus dem Messsignal möglich. Der THz-Sendestrahl kann hierbei zeitbasiert, frequenzmoduliert oder gepulst ausgebildet werden. Neben dem Einsatz eines einzelnen THz-Transceivers sind auch phased-array-Anordnungen bekannt, bei denen z.B. ein zentraler THz-Sender die THz-Strahlung mit einem Abstrahlkegel aussendet und die reflektierte THz-Strahlung von Empfängern der array-Anordnung detektiert wird. Durch eine Synchronisation des Senders und der Empfänger können somit Laufzeiten ermittelt werden und durch das verschobene Eintreffen der Wellenfront bei den Empfängern kann somit der Winkel der eintreffenden Welle ausgewertet werden, so dass Entfernung und Lage der Reflexionsquelle im Raum bestimmt werden können.

Die Vermessung z.B. eines geförderten Kunststoffrohrs oder eines einfachen Kunststoff-Profils mittels eines THz-Sensors ist im Allgemeinen mit relativ geringen Aufwand möglich, um somit die Schichtdicken zu überprüfen. So kann von einer oder mehreren Messpositionen aus z.B. ein Rohr oder Profil vollumfänglich durchstrahlt werden und an den mehreren Grenzflächen jeweils ein Messpeak ermittelt werden. Hierbei ist eine relativ geringe Anzahl von Messpositionen erforderlich, z.B. durch Verstellung des Sensors oder durch Anordnung mehrerer Sensoren um das Messobjekt herum.

Somit sind auch Regelungen von Extrusionsverfahren bekannt, bei denen aus der Ermittlung von Schichtdicken die Extrusionsanlage entsprechend angesteuert werden kann, so dass eine ermittelte Haupt-Schichtdicke zur Regelung herangezogen wird, z.B. die Wanddicke eines Rohres.

Komplexer geformte Körper, z.B. auch Profile mit mehreren Stegen und Wänden zur Ausbildung verschiedener Kammern oder auch z.B. von Profilen mit Dichtlippen sind jedoch im Allgemeinen problematisch.

Weiterhin ist grundsätzlich auch der Einsatz von aktiven phased-array-Anordnungen bekannt, bei denen die array-Anordnung mehrere THz-Transceiver ausweist, die jeweils zeitweise aktiv THz-Strahlung aussenden und reflektierte Strahlung detektieren, und zeitweise lediglich passiv die von einem anderen THz-Transceiver ausgesendete und reflektierte Strahlung detektieren. Durch die Vielzahl unterschiedlicher Sender und Empfänger einer derartigen multiple-in-multiple-out (MIMO)-Anordnung ist somit eine Auswertung mehrerer Referenzflächen möglich.

Weiterhin sind grundsätzlich Radarmessverfahren bekannt, die eine synthetische Radarapertur (SAR) verwenden. Hierbei wird ein Radar-Sensor entlang eines Messobjektes bewegt und während der Bewegung fortlaufend Messbilder bzw. Messsignale aufgenommen. Derartige SAR-Ermittlungen werden insbesondere von Flugobjekten wie Flugzeugen oder Satelliten aus vorgenommen und ermöglichen eine zweidimensionale Darstellung eines Geländeausschnitts. Hierbei sendet der Sensor jeweils mit einem hinreichend großen Abstrahlkegel aus, so dass sich die Abstrahlkegel aus den verschiedenen Messpositionen überlagern. Da die Messpositionen des Senders bekannt sind, insbesondere bei einer Verstellrichtung (Azimut-Richtung) am Messobjekt vorbei, überlagern sich die Messbilder bei bekannten Messpositionen. Es wird somit das Objekt im Zielgebiet unter veränderlichen Blickwinkel angestrahlt und entsprechend detektiert. Aus der Intensität und Phasenlage der empfangenen Radarechos kann die Apertur einer großen Antenne synthetisiert werden und hierdurch eine hohe Ortsauflösung und Bewegungsrichtung der Antenne erzielt werden. Hierbei können durch einen Radarsignal-Prozessor bzw. eine Steuer- und Auswerteeinrichtung die einzelnen Amplituden und Phasenlagen derartig miteinander verbunden werden, dass ein großes Bild als virtuelles Model, d.h. Höhenprofil synthetisiert wird. Durch die SAR-Auswertealgorithmen können auch die Phasen der empfangenen Signale korrigiert werden, wobei auch Laufzeitunterschiede zwischen einzelnen Antennenpositionen korrigiert und somit die trigonometrischen Verhältnisse berücksichtigt werden können. Laufzeitunterschiede können hierbei als Phasenunterschiede gemessen werden.

Die US 2014/0070111 A1 zeigt Verfahren zur Signalverarbeitung sowie Systeme zur Detektion und Identifikation von Explosivstoffen unter Verwendung elektromagnetischer Strahlung. Hierbei wird Radar-Strahlung auf einen Körper einer Person ausgesandt und reflektierte Strahlung detektiert, wobei von einer ersten Oberfläche eine erste Reflektion detektiert wird und weiterhin eine zweite reflektierte Strahlung detektiert wird, die von einem Material auf oder in der Nähe der Oberfläche des Körpers stammen kann, wobei die Zeitverzögerung der Reflektion ermittelt wird.

In JUBO HAO ET AL: "Three-dimensional Imaging of Terahertz Circular SAR with Sparse Linear Array", Zeitschrift "Sensors 2018, 18,2477, wird ein Verfahren beschrieben, bei dem Terahertz synthetic aperture radar SAR eingesetzt wird, um bei Sicherheitsüberprüfungen ein 3D-Imaging-Verfahren unter Verwendung von SAR einzusetzen.

In BACCOUCHE BESSEM ET AL: "Three-Dimensional Terahertz Imaging With Sparse Multistatic Line Arrays", Zeitschrift IEEE Journal of Selected Topics in Quantum Electronics, Vol. 23, No. 4, July/2017,
beschreibt ein dreidimensionales Terahertz-Imaging-Verfahren mit multistatischen Zeilen-Anordnungen, in Kombination mit einer digitalen Strahlformung (DBF), durch die eine dreidimensionale (3D) Terahertz-Bild-Rekonstruktion eines Objektes ermöglicht wird.

Die DE 10 2016 111 044 A1 beschreibt eine Terahertz-Messvorrichtung und ein Terahertz-Messverfahren zur Vermessung eines Prüfobjektes mittels einer Laufzeitmessung, wobei von einer Terahertz-Sende- und Empfangseinheit Terahertz-Strahlung auf ein Prüfobjekt ausgesandt wird und mindestens eine passive Terahertz-Empfangseinrichtung vorgesehen ist, deren optische Achse zu der optischen Achse der Terahertz-Sende- und Empfangseinheit versetzt oder geneigt angeordnet ist, wobei von dem Prüfobjekt reflektierte Strahlung detektiert wird und,die Terahertz-Sende- und Empfangseinheit und die mindestens eine passive Terahertz-Empfangseinheit mittels eines Synchronisationssignals zur Synchronisierung verbunden sind.

Aus KNIFFIN GABRIEL ET AL: "Parabolic Equation Methods for Terahertz 3-D Synthetic Aperture Imaging", IEEE Transactions on Terahertz Science and Technology, Vol. 6, No. 6, Nov. 2016,
ist eine Berechnung mittels parabolischer Gleichungen beschrieben, um dreidimensionale (3D) Terahertz-Tomographie-Bilder von Objekten unter Verwendung eines einzelnen Datensatzes, der mittels einer 2D-synthetischen Apertur gewonnen wurde, auszubilden. Hierbei sollen Brechungs-Effekte berücksichtigt werden.

Der Erfindung liegt daher die Aufgabe zugrunde, ein Messsystem und ein Verfahren zur Vermessung eines Messobjektes zu schaffen, die eine genaue Ermittlung auch komplexer Messobjekte mit relativ geringen Aufwand ermöglichen.

Diese Aufgabe wird durch ein Messsystem und ein Verfahren nach den unabhängigen Ansprüchen gelöst. Die Unteransprüche beschreiben bevorzugte Weiterbildungen. Das erfindungsgemäße Messsystem ist insbesondere zur Durchführung des erfindungsgemäßen Verfahrens vorgesehen; das erfindungsgemäße Verfahren kann insbesondere mit dem erfindungsgemäßen Messsystem ausgeführt werden.

Weiterhin wird eine Mess-Anordnung aus dem Messsystem und dem zu vermessenden Objekt geschaffen. Auch wird ein Verfahren zum Herstellen eines Kunststoffprofils geschaffen, bei dem das Verfahren zur Messung eingesetzt ist.

Somit wird ein aktives phased-array-Verfahren bzw. multiple-in-multiple-out-Verfahren, bei dem die einzelnen THz-Transceiver einer Antennenmatrix jeweils zeitweise aktiv und passiv sind, mit einem SAR-Messverfahren kombiniert; dem liegt der Gedanke zugrunde, dass SAR-Messverfahren als Radarverfahren bereits in einem entsprechenden Frequenzbereich von z.B. um 10 GHz bekannt sind, so dass grundsätzlich die hierfür bekannten und erprobten Auswerte-Verfahren bzw. SAR-super-resolution-Algorithmen auch für Strahlung im THz- Frequenzbereich, der z. B. von 10 GHz bis 50 THz reichen kann, eingesetzt werden können. Auch werden SAR-Vermessungen, bei denen somit Radarstrahlen eine Oberfläche z.B. einer Landschaft abtasten, bereits zur Ermittlung von Reflexionspeaks der reflektierten Strahlung eingesetzt. Bei der THz-Vermessung von Messobjekten aus transparentem Material mit unterschiedlichem Brechungsindex, insbesondere Kunststoff-Produkten, werden ebenfalls Reflexionspeaks erzeugt, da die THz-Strahlung beim Durchtreten einer Grenzfläche z.B. mit 2 bis 7 %, z.B. 5 % der Intensität reflektiert wird, so dass die Reflexionspeaks entsprechend den Reflexionspeaks eines Höhenradars ausgewertet werden können. Da beim Durchstrahlen eines Messobjektes mit mehreren Grenzflächen die Messpeaks in dem Messsignal sukzessive auftreten, können somit die einzelnen Messpeaks den verschiedenen Grenzflächen zugeordnet werden.

Relevante Frequenzbereiche sind insbesondere als untere FrequenzGrenze 10GHZ, insbesondere auch 20 GHZ oder 50 GHZ, wobei Messungen auch z.B. bei 80 GHZ eingesetzt werden. Als obere Frequenzgrenze sind z.B. 50 THz relevant, weiterhin auch z.B. 20 THz oder 10 THz, d.h. ein Frequenzbereich von z.B.
[10GHz, 20GHz, 50GHZ ; 10 THz, 20 THz, 50 THz].

Durch die Kombination eines Messsignals mit aktivem phased-array, d.h. synchronisierten THz-Transceivern einer multiple-in-multiple-out-Vermessung, und einer Verstellung in mehrere Messpositionen unter Überlagerung der so ermittelten Messsignale mit einer SAR-Auswertung kann eine phased-array-Antenne mit größerer Apertur simuliert werden und ein hochauflösendes Bild als virtuelles Model angefertigt werden.

Als Verstellbewegung kann insbesondere eine Schwenkbewegung bzw. Umlaufbewegung des Antennenarrays um die Symmetrieachse, in der das Messobjekt positioniert wird, herum ausgeführt werden. Die Verstellbewegung des Antennenarrays um die Symmetrieachse herum liefert somit bekannte Messpositionen als Positionsinformationen für einen SAR-Auswertealgorithmus. Durch eine derartige Schwenkbewegung, in der jeweils die optische Haupt-Achse des Antennenarrays senkrecht auf die Symmetrieachse gerichtet ist, wird auch gewährleistet, dass die verschiedenen, z. T. vielfältigen Flächen des Messobjektes zumindest zeitweise in einem Reflexionssignal erfasst werden können, insbesondere auch durch die hohe Winkelauflösung der aktiven phased-array-Anordnung mit sukzessive aktiv und passiv wirkenden THz-Transceivern. Somit kann im Allgemeinen jede Fläche zumindest zeitweise erfasst werden; vorzugsweise kann sogar die optische HauptAchse der Antennenmatrix zeitweise senkrecht zu jeder Fläche ausgerichtet sein.

Somit können bei jeder Messung in einer entsprechenden Messposition zunächst Reflexionspeaks ermittelt werden, die nachfolgend durch das SAR-Auswerteverfahren überlagert werden können.

Die Vermessung mittels eines phased-array und einer Umlaufbewegung um das Messobjekt mit SAR-Auwertung wirken hierbei in besonderer Weise zusammen:
So können nicht nur die mehreren Messungen in den Messpositionen um das Messobjekt herum durch ein SAR-Auswerteverfahren ausgewertet werden, sondern auch bereits die einzelnen Messungen der THz-Transceiver einer phased-array -Messung, d.h. die Messungen in jeder Matrix-Position. Indem sich die Aussendekegel der einzelnen THz-Transceiver einer phased-array Messung vorteilhafterweise bereits vor dem Messobjekt überschneiden, liegt auf dem Messobjekt ein Überlapp der Aussendekegel vor; somit stellen die sukzessiven einzelnen Messungen der THz-Transceiver einer phased-array-Anordnung in jeder Messposition Vermessungen aus leicht versetzten Messpositionen dar. Die nachfolgenden Verstellungen des phased-arrrays in weitere Messpositionen, insbesondere um das Messobjekt herum, liefern dann weitere THz-Vermessungen, die wiederum jeweils eine Vielzahl sukzessiver einzelner THz-Vermessungen jeder Matrix-Position enthalten. Sämtliche Messungen können durch eine SAR-Auswertung verarbeitet werden. Die SAR-Auswertung kann somit die einzelnen THz-Messungen jeder Matrix-Position einer phased-array-Anordnung erfassen, und dies in einer Verstellung um das Messobjekt herum, so dass eine hohe Anzahl von Einzelsignalen verarbeitet werden kann.

Somit können jeweils hochauflösende Teilabschnitte des Messobjektes, insbesondere eines Kunststoffprofils ermittelt werden. Durch die Rekonstruktions-Auswerteverfahren eines SAR-Verfahrens können nachher die Teilabschnitte überlagert werden zu einem gemeinsamen virtuellen Model des Profils.

Aus diesem virtuellen Model können dann die Wanddicken berechnet werden, indem in dem virtuellen Model die Referenzflächen erkannt und Schichtdicken bzw. Wanddicken als Abstände dieser Grenzflächen ermittelt werden. Auch die Dicke von Kammern kann entsprechend als Schichtdicke der Luftschicht zwischen Wänden erkannt werden. Vorteilhafterweise wird somit anders als in herkömmlichen Systemen nicht die Schichtdicke direkt aus dem Messsignal ermittelt, sondern es werden durch die SAR- Auswerteverfahren der phased-array-Messungen zunächst die Referenzflächen in einem virtuellen Modell ermittelt und hieraus die Schichtdicken.

Somit ist auch die Vermessung von z. B. Kunststoffprofilen mit einer Vielzahl von z.T. schräg verlaufenden Stegen und Wänden möglich.

Weiterhin können insbesondere auch Bereiche des Messobjektes wie z.B. Dichtlippen von Kunststoffprofilen vermessen werden, die z.T. keine planparallelen Grenzflächen aufweisen und z.T. gekrümmt oder abgeschrägt sind. Bei derartigen Dichtlippen ist eine direkte Vermessung mittels einer THz-Messvorrichtung aus einer Messposition im Allgemeinen nicht oder nur ungenügend möglich. Durch das erfindungsgemäße Verfahren kann somit in dem virtuellen Model auch die Ausbildung einer derartigen Dichtlippe erkannt und eine Referenzdicke ermittelt werden.

Es zeigt sich insbesondere, dass der Einsatz von THz-Transceivern, d.h. kombinierten Sende- und Empfangs-Einrichtungen, hier die besondere Kombination der verschiedenen Vermess-Funktionalitäten ermöglicht und somit zur Erstellung eines virtuellen Modells beiträgt.

Erfindungsgemäß wird somit auch eine Vermessung und Simulation von Profilen, insbesondere Profilen mit ein oder mehreren (mehr als einem) Hohlräumen bzw. Kammern ermöglicht, die vorzugsweise deutlich komplexer sind als z.B. Rohre oder durchgängige Stränge. Diese Vermessung ist somit erfindungsgemäß in einem durchgängigen und/oder kontinuierlichen Förderverfahren des Profils möglich, z.B. direkt nach der Herstellung, insbesondere Extrusion.

Somit kann auch ein Extrusionsverfahren geschaffen werden, bei dem mittels des erfindungsgemäßen Messverfahrens eine derartige Referenzdicke z.B. einer Dichtlippe ermittelt und nachfolgend die Extrusion durch entsprechende Steuersignale der Messvorrichtung derartig eingestellt wird, dass auf eine Soll-Ausbildung, z.B. Soll-Referenzdicke der Dichtlippe geregelt wird.

Die Erfindung wird im Folgenden anhand der beiliegenden Zeichnungen an einigen Ausführungsformen erläutert:

### Es zeigen:

- Fig. 1: eine Messsystem gemäß einer Ausführungsform der Erfindung zur Vermessung eines Messobjektes;
- Fig. 2: das Messsystem aus Figur 1 bei translatorischer Verstellung der Antennenmatrix;
- Fig. 3: eine der Figur 2 entsprechende Darstellung bei Verschwenken der Antennenmatrix;
- Fig. 4: das Messsystem in unterschiedlichen Messpositionen der Antennenmatrix bei Vermessung eines weiteren Messobjektes;
- Fig. 5: eine Produktionslinie mit Extruder und Messsystem,
- Fig. 6: ein Flussdiagramm eines erfindungsgemäßen Verfahrens.

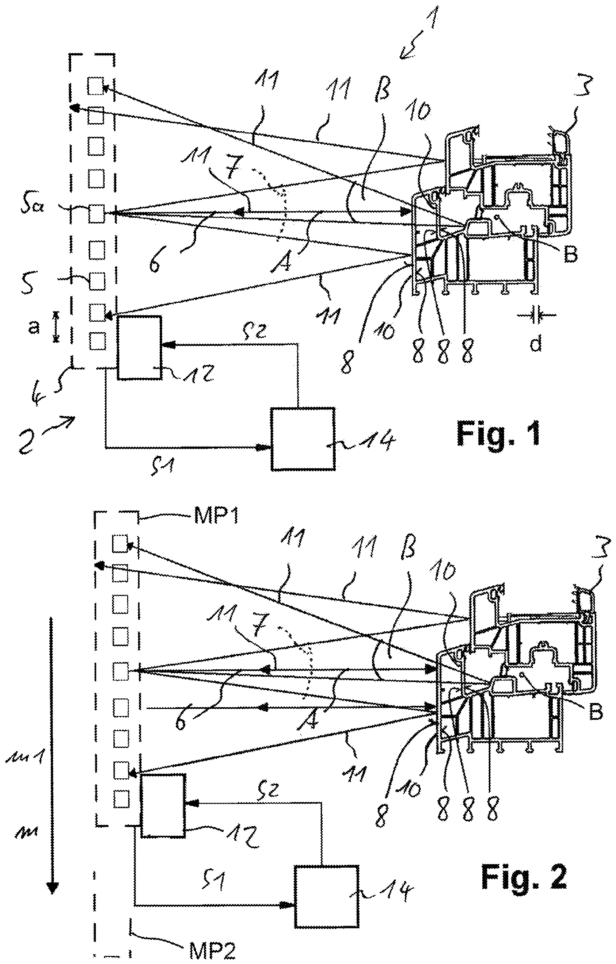

In einer Mess-Anordnung 1 ist ein Messsystem 2 zur Vermessung eines Messobjektes 3 vorgesehen. Das Messsystem 2 weist eine Antennenmatrix 4 mit einer Matrix-Anordnung, d.h. insbesondere zweidimensionaler regelmäßiger Anordnung, aus THz-Transceivern 5 auf. Wie insbesondere an dem mittleren THz-Transceiver 5a gezeigt, sendet jeder THz-Transceiver 5 einen THz-Sendestrahl 6 entlang einer optischen Achse A mit einem Abstrahl-Kegel 7 aus. Der THz-Sendestrahl liegt insbesondere im Frequenzbereich von 0,01 bis 50 THz, insbesondere 0,02 oder 0,05 bis 10 THZ oder 20 THz. Die THz-Transceiver 5 sind in dieser Ausbildung vollelektronisch ausgebildet, d.h. als Antennendipole. Hierbei kann der THz-Sendestrahl 6 frequenzmoduliert, aber auch z.B. in time domain Spektroskopie (TDS) bzw. gepulst ausgesendet werden. Der THz-Transceiver 5a sendet somit gemäß Figur 1 den THz-Sendestrahl 6 entlang der optischen Achse A auf das Messobjekt 3.

Das Messobjekt 3 ist in dieser Ausführungsform als Kunststoff-Profil ausgebildet und im Querschnitt gezeigt. Es ist vorteilhafterweise extrudiert und weist eine Vielzahl von Grenzflächen 8 auf, die in allgemeinen Grenzflächen von Stegen 10 oder Wänden des Kunststoffmaterial gegenüber dem mit Luft gefüllten Außenraum oder auch inneren mit Luft oder einem Gas gefüllten Kammern 9 sind.

Der THz-Sendestrahl 6 wird beim Ein- und Austreten aus den Grenzflächen 8 jeweils teilweise reflektiert, wobei z.B. 5 % der Intensität oder Amplitude reflektiert werden und somit ein Großteil des THz-Sendestrahls 6 weiter durch das Kunststoffprofil 3 tritt. Somit werden in Figur 1 z.B. die beiden eingezeichneten Stege 10 mit ihren Grenzflächen 8 jeweils den THz-Sendestrahl 6 entlang der optischen Achse A zurück zu den mittleren THz-Transceiver 5a reflektieren, der somit von den Grenzflächen 8 ausgebildete Messpeaks in der zurück-reflektierten THz-Strahlung 11 detektiert und somit z.B. den Abstand des Messobjekts 3 bzw. der ersten Grenzfläche 8 zu dem THz-Transceiver 5a, die Schichtdicken der Stege 10a, 10b und die Breite der Kammer 9 zwischen den Grenzflächen 8 detektieren kann.

Ein Großteil der Grenzflächen 8 des Kunststoffprofils 3 liegt nicht senkrecht zu optischen Achse A, so dass an ihnen reflektierte THz-Strahlung 11 unter einem größeren Reflexionswinkel β zurückreflektiert wird, die von dem THz-Transceiver 5a selbst nicht detektiert werden kann. Einige Grenzflächen 8 reflektieren die THz-Strahlung 11 unter einem derartig geringen Reflexionswinkel β, dass die THz-Strahlung 11 zu einem der weiteren THz- Transceiver 5 der Matrix-Anordnung 4 zurückreflektiert wird. Da die weiteren THz-Transceiver 5 der Matrix-Anordnung 4 mit dem mittleren THz- Transceiver 5a synchronisiert sind, können die so aufgenommenen Messpeaks der reflektierten THz-Strahlung dem THz-Sendestrahl 6 des mittleren THz- Transceivers 5a zugeordnet werden. Somit empfangen die als Empfänger dienenden THz-Transceiver 5 die reflektierte THz-Strahlung 11 bzw. die reflektierten Wellen und können diese dem THz-Sendestrahl zuordnen. Die Wellenfronten treffen bei den benachbarten bzw. nachfolgenden, hier passiven THz-Transceivern 5 jeweils zeitlich verschoben ein, so dass aus der zeitlichen Verschiebung bzw. dem Zeitpunkt der Messung des Messpeaks und weiterhin dem Reflexionswinkel β der reflektierten THz-Strahlung 11 gegenüber dem THz-Sendestrahl 6 die Entfernung und Lage der Reflexionsquelle, d.h. der betreffenden Grenzfläche 8 des Kunststoffprofils 3, bestimmt werden kann.

Durch diese Vermessung nach dem Prinzip der Antennenmatrix können somit bereits nicht nur genau senkrecht stehende Grenzflächen 8 sondern auch gegenüber der optischen Achse A leicht geneigt verlaufende Grenzflächen 8 detektiert werden.

Weiterhin ist gemäß Figur 2 vorgesehen, dass nicht nur ein bestimmter THz-Transceiver, sondern sämtliche THz-Transceiver 5 der Matrix-Anordnung 4 zeitweise aktiv und zeitweise passiv sind; der jeweils aktive THz-Transceiver 5 sendet jeweils entlang seiner optischen Achse A einen THz-Sendestrahl 6 mit einem entsprechenden Abstrahlkegel 7 bzw. Öffnungswinkel aus, und sämtliche anderen THz-Transceiver 5 sind dann jeweils passiv und detektieren die reflektierte THz-Strahlung 11, unter Synchronisation der Aussendezeitpunkte. Somit fungieren alle Empfänger auch als Sender, d.h. es wird eine multiple-in-multiple-out- Messanordnung ausgebildet, bei der eine größere Fläche auf einmal abgescannt werden kann, nämlich insbesondere entsprechend der Fläche der gesamten Matrix-Anordnung 4,

Somit können bereits Grenzflächen 8 mit einer etwas größeren Neigung bzw. größerem Winkel relativ zur optischen Hauptachse A erfasst und zugeordnet werden. Der hierdurch erreichbare maximale Winkel bzw. Neigungswinkel der Grenzflächen 8 hängt insbesondere von der Größe der Matrix-Anordnung 4 ab. Weiterhin ist die örtliche Auflösung aus dem Abstand a der THz-Transceiver 5 zueinander begrenzt.

Gemäß einer weiteren vorteilhaften Ausbildung wird daher wie in Figur 2 durch den Pfeil angedeutet die Matrix-Anordnung 4 durch eine Verstelleinrichtung 12 entlang einer Verstellrichtung m (Azimutrichtung) relativ zum Messobjekt 3 verstellt, hier z.B. zunächst linear translatorisch. Hierdurch wird eine synthetische Radar-Apertur (SAR) ausgebildet, bei der die THz-Transceiver 5 jeweils Messungen als multiple-in-multiple-out-Ausbildung mit alternierender aktiver Sende-Funktion und Empfänger-Funktion der mehreren THz-Transceiver 5 durchführen, wobei die Messungen durch Super-Resolution Algorithmen verarbeitet werden. Bei einem ruhenden Messobjekt 3 und bekannter Verstellbewegung der Antennenmatrix 4 entlang der Verstellrichtung m sind somit die Positionen des Messobjekts 3 relativ zu den jeweiligen Messpositionen der Antennenmatrix 4 in der Verstellbewegung bekannt, so dass eine entsprechende Auswertung durch einen SAR-Algorithmus ermöglicht wird.

Während bei einem klassischen SAR zunächst von jedem THz-Transceiver 5 die senkrechten Grenzflächen 8 des Messobjektes 3 erfasst und verarbeitet werden, wird hier die synthetische Radar-Apertur (SAR) mit dem MIMO-Messprinzip der jeweils aktiven und passiven THz-Transceiver 5 der Matrix-Anordnung 4 kombiniert. Somit kann bereits ein sehr exaktes Bild mit hochauflösenden Winkeln und Positionsdaten generiert werden.

Die einzelnen THz-Transceiver 5 der Matrix-Anordnung 4 liefern Messsignale S1 an eine Steuer- und Auswerteeinrichtung 14, die die Messignale S1 entsprechend auswertet. Bei der MIMO -Ausbildung nach Figur 2 können in der Steuer- und Auswerteeinrichtung 14 somit die Synchronisationsdaten zugrunde gelegt werden, unter Einbeziehung der Abstände a der THz-Transceiver 5 in der zweidimensionalen Matrix-Anordnung 4 und der Synchronisation der jeweiligen Aussende-Zeitpunkte. Die Steuer- und Auswerteeinrichtung 14 steuert weiterhin die Verstelleinrichtung 12 mittels Steuersignalen S2 zur Einstellung der Messpositionen der Antennenmatrix 4 gegenüber dem stationären Messobjekt 3.

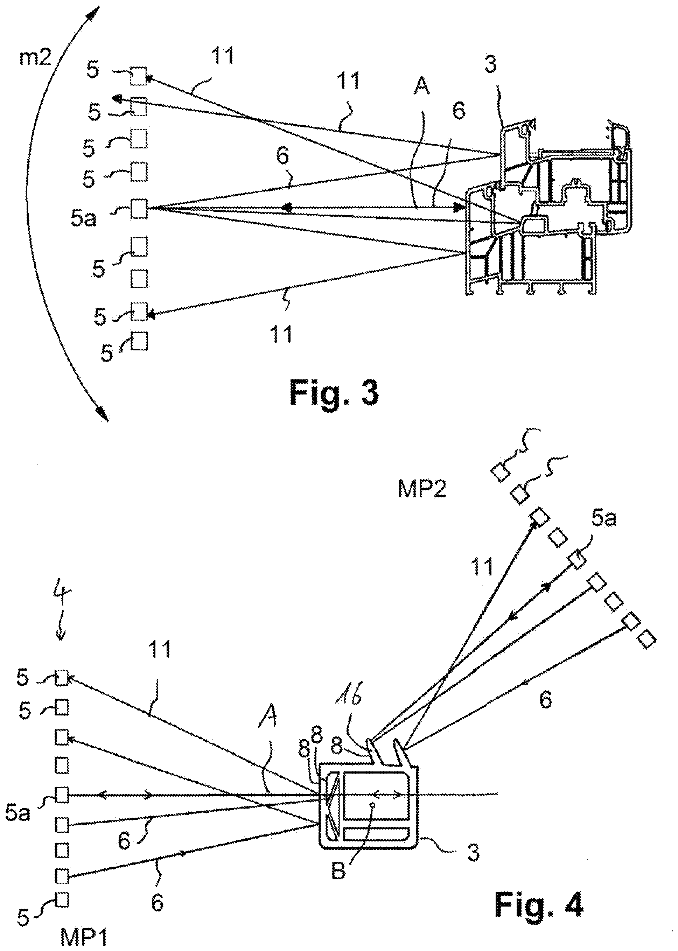

Gemäß Figur 3 ist eine Schwenkbewegung der als MIMO ausgebildeten Matrix-Anordnung 4 vorgesehen, insbesondere einer Schwenkbewegung m2 um das Messobjekt 3 herum. Die Matrix-Anordnung 4 kann z.B. um 180° um das Messobjekt 3 herumgeschwenkt werden oder auch vollumfänglich, z.B. in einer Kreisbewegung um das Messobjekt 3 herum. Hierbei ist es grundsätzlich auch unproblematisch, wenn das Messobjekt 3 nicht genau im Zentrum der Kreisbewegung bzw. der Schwenkachse der Kreisbewegung liegt, da erfindungsgemäß erkannt wird, dass durch die Schwenkbewegung und die hierdurch ausgebildete Vielzahl unterschiedlicher Positionen der einzelnen THz-Transceiver 5 gegenüber dem Messobjekt 3 und seinen verschiedenen Grenzflächen 8 bereits eine sehr hohe Auflösung erreicht wird, und bei unregelmäßigen Messobjekten 3 ohnehin die Definition einer Symmetrieachse zum Teil nicht eindeutig ist. Bei der Schwenkbewegung nach Figur 3 wird jede Grenzfläche 8 des Messobjekts 3 entsprechend ihrer jeweiligen Ausrichtung mehrfach erfasst, wobei sie irgendwann senkrecht zu einem der THz-Transceiver 5 der als MIMO-SAR-Array dienenden Matrixanordnung 4 steht, so dass jede Grenzfläche 8 bei dieser Vermessung erfasst und detektiert wird. Vorteilhafterweise werden die Grenzflächen 8 mehrfach erfasst, um die Messungen mitteln zu können. So werden die Grenzflächen 8 durch die MIMO-Anordnung in einem größeren Winkelbereich als nur für den senkrechten Fall erfasst.

Somit wird eine SAR-Vermessung, die grundsätzlich für senkrechte Flächen ausgelegt ist, durch das Antennen-array 4 mit zusätzliche MIMO-Anordnung erweitert.

Somit kann die Steuer- und Auswerteeinrichtung 14 eine Datenbasis von hochauflösenden Teilabschnitten des Profils in einer Speichereinrichtung 15 anlegen, und anschließend aus dieser Datenbasis mit entsprechenden Rekonstruktionsalgorithmen ein vollständiges virtuelles Model VM des Messobjekts 3 zusammensetzen, hier somit eines komplexeren Kunststoffprofils, aus dem dann die Schichtdicken ermittelt werden.

Figur 4 zeigt eine entsprechende Vermessung eines anderen Messobjektes 3, das hier insbesondere unregelmäßig geformte Dichtlippen 16 aufweist. Deren unregelmäßige Grenzflächen 8 können entsprechend durch die MIMO-SAR-Verstellung und Signalerfassung zunächst nachgebildet und dann in dem Model vermessen werden. Somit kann insbesondere ein spezifischer Parameter der Dichtlippe 16, z.B. eine an bestimmter Stelle festgelegte Referenz-Dicke d_ref ermittelt und mit einem Soll-Wert verglichen werden.

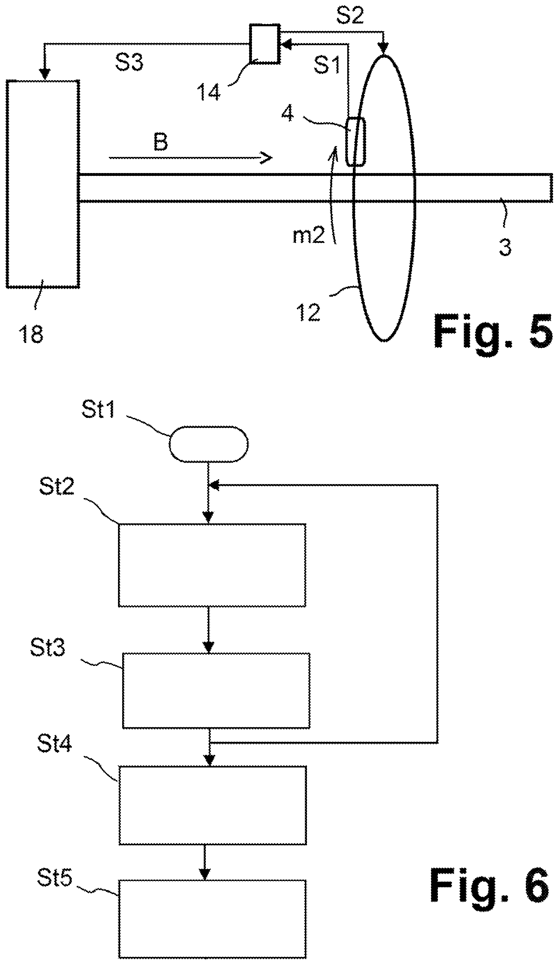

Somit ist insbesondere auch gemäß Figur 5 eine Regelung des Extrusions-Prozesses möglich, bei dem nicht auf eine direkt gemessene Dicke bzw. Wanddicke geregelt wird, sondern die so ermittelte Referenzdicke d_ref für eine Regelung herangezogen wird, bei der die Steuer- und Auswerteeinrichtung 14 Steuersignale S3 an den Extruder 18 zur Ausbildung des Kunststoffprofils 3 ausgibt, so dass der Extruder 18 die Zufuhr des Extrusionsmaterials in Abhängigkeit der Steuersignale S3 einstellt, und nicht z.B. auf eine direkt in einem Messsignal ermittelte Schichtdicke.

Figur 6 zeigt ein Flussdiagramm eines Verfahrens gemäß einer Ausführungsform der Erfindung. Gemäß Schritt St1 wird eine Matrix-Anordnung 4 in einer Messposition MP1 positioniert, so dass ihre optische Haupt-Achse A, d.h. die optische Achse A des mittleren Transceiver 5a, auf das Messobjekt 3 gerichtet ist, hier z.B. ein Kunststoffprofil. Gemäß Schritt St2 erfolgt dann in der Messposition MP1 die erste Messung, bei der die THz-Transceiver 5 sukzessive jeweils aktiv einen THz-Sendestrahl 5 ausgeben und passiv reflektierte THz-Strahlung 11 detektieren.

Weiterhin wird die Messanordnung 4 gemäß Schritt St3 sukzessive entlang der Verstellrichtung m1 oder m2 verstellt, so dass in den verschiedenen Messpositionen MP1, MP2, ... sukzessive Vermessungen erfolgen. Hierbei kann die Verstellung im Allgemeinen gleichzeitig mit den Vermessungen erfolgen, wobei die Messvorgänge gegenüber der Verstellgeschwindigkeit relativ schnell erfolgen und somit im Wesentlichen jeweils in einer Messposition durchgeführt werden können. Die Mess-Schleife der Schritte St2, St3 wird dann wiederholt, bis aus allein Messpositionen Messsignale S1 vorliegen.

Gemäß Schritt St4 werden die Messsignale S1 der Matrix-Anordnung jeder Messposition MP1, MP2, ... dann nachfolgend durch ein SAR-Auswerteverfahren mit Rekonstruktionsalgorithmen ausgewertet, so dass vorzugsweise zunächst Teilbereiche eines virtuellen Modells und daraus ein vollständiges virtuelles Modell VM des Kunststoffprofils 3 zusammengesetzt wird. Aus diesem virtuellen Modell VM werden dann gemäß Schritt St5 die Grenzflächen 8 und hieraus die Wanddicken d ermittelt.

Diese ermittelten Wanddicken d, insbesondere auch z.B. einer Referenz-Dicke d_ref kann dann ggf. zur Ansteuerung eines Extruders 18 eingesetzt werden.

Das Messobjekt 3 kann ebenfalls während der Messung verstellt werden, wenn diese Verstellgeschwindigkeit des Messobjektes 3 geringer ist als die Verstellgeschwindigkeit m1, m2 der Matrix-Anordnung 4. Da die MatrixAnordnung 4 eine zweidimensionale Erstreckung aufweist, erstreckt sie sich nicht nur in der Zeichenebene der Figuren 1-4, sondern auch in Richtung der Förder- oder Symmetrieachse des Messobjektes 3, so dass immer eine hinreichende Länge des Profilstrangs erfasst wird. Somit ist eine kontinuierliche Vermessung eines Extrusionsproduktes während der Herstellung möglich.

### Bezugszeichenliste

- 1: Messanordnung
- 2: Messsystem
- 3: Messobjekt, z. B. Kunststoffprofil
- 4: Antennenanordnung, insbesondere Antennenmatrix
- 5: THz-Transceiver
- 5a: mittlerer THz-Transceiver
- 6: THz-Sendestrahl
- 7: Abstrahlkegel, Aussendekegel
- 8: Grenzfläche
- 9: Kammer des Kunststoffprofils 3
- 10: Wände, Stege
- 11: reflektierte THz-Strahlung
- 12: Verstelleinrichtung
- 14: Steuer- und Auswerteeinrichtung
- 16: Dichtlippe
- 18: Extruder

- A: optische Achse, z.B. des mittleren Transceivers 5a
- B: Symmetrieachse, Förderrichtung des Messobjekts 3
- S1: Messsignal
- S2: Stellsignal an die Verstelleinrichtung 12
- S3: Steuersignal zur Ansteuerung des Extruders 18
- MP1, MP2, ...: Messpositionen
- VM: virtuelles Modell

- a: Abstand der Transceiver 5
- d: Schichtdicke
- d_ref: Referenzdicke einer Dichtlippe 16
- m1, m2: Verstellrichtungen
- β: Reflexionswinkel

## Patentansprüche

1. Messsystem (2) zur Vermessung eines Messobjektes, insbesondere eines Kunststoffprofils (3), wobei das Messsystem (2) aufweist:
eine Antennenanordnung (4) aus mehreren THz- Transceivern (5), die jeweils zeitweise aktiv einen THz-Sendestrahl (6) aussenden und zeitweise passiv reflektierte THz-Strahlung (11) aufnehmen,
wobei die Antennenanordnung (4) Messsignale (S1) der Messungen der THz-Transceiver (5) ausgibt,
eine Verstelleinrichtung (12) zum Verstellen der Antennenanordnung (4) in mehrere Messpositionen (MP1, MP2, MP3) entlang einer Verstellrichtung (m1, m2),
eine Steuer- und Auswerteeinrichtung (14) zur Aufnahme und Auswertung der Messsignale (S1), die derartig eingerichtet ist, dass die Messsignale (S1) der mehreren THz-Transceiver (5) in den mehreren Messpositionen (MP1, MP2,...) durch ein SAR-Auswerteverfahren ausgewertet werden und ein virtuelles Modell (VM) der Grenzflächen (8) des Messobjekts (3) ausgebildet wird, und
nachfolgend die Steuer- und Auswerteeinrichtung (14) aus dem virtuellen Modell (VM) Schichtdicken (d) zwischen den Grenzflächen (8) ermittelt.

2. Messsystem nach Anspruch 1, **dadurch gekennzeichnet, dass** das Messsystem (2) eine Umfangsbahn, insbesondere eine ganze oder teilweise Kreisbahn (m2) enthält, und
die Verstelleinrichtung (12) die Antennenanordnung (4) entlang der Umfangsbahnum eine Symmetrieachse (B) des Messsystems (2) schwenkt,
wobei bei den Messungen in den verschiedenen Messpositionen (MP1, MP2,...) der Umfangsbahn eine optische Hauptachse (A) der Antennenanordnung (4) jeweils auf die Symmetrieachse (B) ausgerichtet ist.

3. Messsystem (2) nach einem der vorherigen Ansprüche, **dadurch gekennzeichnet, dass** die Antennenanordnung (4) eine zweidimensionale, vorzugsweise plane Anordnung von THz-Transceivern (5), insbesondere mit konstantem Abstand (a) zwischen den THz-Transceivern (5), z.B. als Antennenmatrix (4), aufweist.

4. Messsystem (2) nach einem der vorherigen Ansprüche, **dadurch gekennzeichnet, dass** der THz-Transceiver (5), der gerade aktiv den THz-Sendestrahl (6) aussendet, ebenfalls reflektierte THz-Strahlung (11) detektiert.

5. Messsystem (2) nach einem der vorherigen Ansprüche, **dadurch gekennzeichnet, dass** die THz-Transceiver (5) jeweils an Grenzflächen (8) eines Messobjekts (3) reflektierte THz-Strahlung (11) als Messpeaks detektieren.

6. Messsystem (2) nach einem der vorherigen Ansprüche, **dadurch gekennzeichnet, dass** die THz-Transceiver (5) jeweils THz-Sendestrahl (6) im Frequenzbereich zwischen 0,01 THz bis 50 THz, insbesondere 0,05 THz bis 20 THz aussenden, insbesondere vollelektronisch, z.B. mittels Frequenzmodulation oder gepulster Strahlung.

7. Messsystem (2) nach einem der vorherigen Ansprüche, **dadurch gekennzeichnet, dass** die THz-Transceiver (5) jeweils den THz-Sendestrahl (6) mit einem Aussendekegel (7) aussenden,
wobei sich zumindest die Aussendekegel (7) benachbarter THz-Transceiver (5) bis zu der Symmetrieachse (B) des Messsystems (2) und/oder bis zum Messobjekt (3) zumindest teilweise überlappen.

8. Messsystem (2) nach einem der vorherigen Ansprüche, **dadurch gekennzeichnet, dass** die mehreren Messsignale (S1) durch das SAR-Auswerteverfahren unter Überlagerung oder Kombination der Amplituden und der Phasenlage ausgewertet werden, insbesondere zur Simulation einer phased-array-Antenne mit größerer Apertur,
vorzugsweise unter Messung eines Laufzeitunterschiedes als Phasenunterschied.

9. Mess-Anordnung (1), die ein Messsystem (2) nach einem der vorherigen Ansprüche aufweist, in dessen Symmetrieachse (B) ein Messobjekt (3), z.B. ein Kunststoffprofil mit entlang oder parallel zur Symmetrieachse (B) verlaufender Längsachse angeordnet ist,
wobei die Verstelleinrichtung (12) die Antennenanordnung (4) um das Messobjekt (3) herum verstellt, vorzugsweise auf einer Kreisbahn.

10. Mess-Anordnung (1) nach Anspruch 9, **dadurch gekennzeichnet,**
**dass** eine Fördereinrichtung zum Fördern des Messobjektes (3) entlang der Symmetrieachse (B) oder parallel zur Symmetrieachse vorgesehen ist, vorzugsweise mit kleinerer Fördergeschwindigkeit als die Verstellgeschwindigkeit der Antennenanordnung (4) in der Verstellrichtung (m1, m2).

11. Verfahren zum Vermessen eines Messobjektes (3), insbesondere eines Kunststoffprofils (3), mit mindestens folgenden Schritten:
Bereitstellen oder Positionieren einer Antennenanordnung (4) aus mehreren THz-Transceivern (5) derartig, dass eine optische Achse (A) der Antennenanordnung auf das Messobjekt (3) und/oder senkrecht auf eine Symmetrie-Achse (B) ausgerichtet ist (St1),
Durchführen einer ersten THz-Vermessung des Messobjektes (3) in der ersten Messposition (MP1), wobei die mehreren THz-Transceiver (5) der Antennenanordnung (4) jeweils zeitweise aktiv einen THz-Sendestrahl (6) entlang oder parallel zu ihrer optischen Achse (A) aussenden, die von dem Messobjekt (3) teilweise zurück zu der Antennenanordnung (4) reflektiert wird (St1),
wobei die THz-Transceiver (5) zeitweise passiv reflektierte THz-Strahlung (11) detektieren,
sukzessives Verstellen der Antennenanordnung (4) entlang einer Verstellrichtung (m1, m2) in mehrere Messpositionen (MP1, MP2...), in denen die optische Achse (A) auf das Messobjekt (3) und/ oder senkrecht zu der Symmetrieachse (B) ausgerichtet ist, (St2) und
Durchführen weiterer THz-Vermessungen unter Ausgabe von Messsignalen (S1), (St3)
Auswerten der Messsignale (S1) aus den mehreren Messpositionen (MP1, MP2, MP3), wobei die Messsignale der einzelnen THz- Transceiver (5) mittels SAR-Auswerteverfahren miteinander verarbeitet werden und ein virtuelles Model (VM) eines Querschnittsbereichs des Messobjekt (3) ermittelt wird (St4),
Ermitteln der Grenzflächen (8) und Schichtdicken (d) als Abstände der Grenzflächen (8) in dem virtuellen Model (VM) (St5).

12. Verfahren nach Anspruch 11, **dadurch gekennzeichnet, dass** Abstrahlkegel (7) der einzelnen THz-Transceiver (5), insbesondere von benachbarten THz-Transceivern (5), sich bereits vor dem Messobjekt (3) zumindest teilweise überlappen, und/oder
die Abstrahlkegel (7) der Messungen in den mehreren Messpositionen (MP1, MP2...) sich zumindest teilweise überlappen, zur Ausbildung einer Überlagerung für das SAR-Auswerteverfahren.

13. Verfahren nach einem der Ansprüche 11 bis 12, **dadurch gekennzeichnet, dass** die THz-Transceiver (5) jeweils den THz-Sendestrahl (6) durch das Messobjekt (3) hindurch aussenden unter teilweiser Reflexion an den mehreren Grenzflächen (8) des Messobjektes (3).

14. Verfahren nach einem der Ansprüche 11 bis 13, **dadurch gekennzeichnet, dass** die Messsignale (S1) von MIMO-Messungen in jeder Messposition (MP1, MP2) nachfolgend durch ein SAR- Berechnungsverfahren zusammengesetzt werden, um Teilabschnitte eines virtuellen Modells und hieraus das gesamte virtuelle Model (VM) des Messobjektes (3) auszubilden, wobei dann nachfolgend aus dem virtuellem Model (VM) die Schichtdicken (d) ermittelt werden.

15. Verfahren zum Herstellen eines Kunststoffprofils (3), mit folgenden Schritten:
Extrudieren des Kunststoffprofils (3) entlang oder parallel zu einer Symmetrieachse (B),
Vermessen eines Querschnitts des Kunststoffprofils (3) mittels eines Verfahrens nach einem der Ansprüche 11 bis 14, unter Ermittlung einer Referenz-Dicke (d_ref), z.B. einer Referenz-Dicke einer unregelmäßigen Dichtlippe (16) des Kunststoffprofils (3),
Ausgeben eines Steuersignals (S3) an einen Extruder (18), zur Regelung der ausgebildeten Referenz-Dicke (d_Ref) durch Vermessen des Kunststoffprofils (3), Erstellen des virtuellen Models (VM), Vergleich der Referenz-Dicke (d_ref) des virtuellen Models (VM) mit einem Soll-Wert und Veränderung der Extrusionsparameter durch das Steuersignal (S3) in Abhängigkeit des Vergleichs.

## Claims

1. Measuring system (2) for measuring a measured object, in particular a plastic profile (3), said measuring system (2) comprising:
an antenna arrangement (4) made of a plurality of THz transceivers (5), each at times actively emitting a THz transmission beam (6) and at times passively receive reflected THz radiation (11),
where said antenna arrangement (4) puts out measuring signals (S1) of the measurements of the THz transceivers (5),
an adjustment means (12) for adjusting the antenna matrix (4) into several measuring positions (MP1, MP2, MP3) along an adjustment direction (m1, m2),
a controller and evaluation device (14) for receiving and evaluating the measuring signals (S1) which is configured in such a way that the measuring signals (S1) of said several THz transceivers (5) in said several measuring positions (MP1, MP2,...) are evaluated by means of an SAR evaluation process and a virtual model (VM) of the boundary surfaces (8) of the measured object (3) is created, and
subsequently the controller and evaluation device (14) determines layer thicknesses (d, d4) between the boundary surfaces (8) from the virtual model (VM).

2. Measuring system according to claim 1, **characterised in that** the measuring system (2) includes a circumferential path, in particular, a total or partial circular path (m2), and
the adjustment means (12) pivots the antenna arrangement (4) along the circumferential path about an axis of symmetry (B) of the measuring system (2),
whereby in the measurements in the various measuring positions (MP1, MP2,...) of the circumferential path an optical main axis (A) of the antenna arrangement (4) is each aligned to the axis of symmetry (B).

3. Measuring system (2) according to one of the above claims,
**characterised in that** the antenna arrangement (4) comprises a twodimensional, preferably planar, arrangement of THz transceivers (5), in particular at constant distances (a) between the THz transceivers (5), e.g. as antenna matrix (4).

4. Measuring system (2) according to one of the above claims,
**characterised in that** the THz transceiver (5) which currently is actively emitting the THz transmission beam (5) also detects the reflected THz radiation (11).

5. Measuring system (2) according to one of the above claims,
**characterised in that** the THz transceivers (5) each detect THz radiation (11) reflected on boundary surfaces (8) of a measured object (3) as measuring peaks.

6. Measuring system (2) according to one of the above claims,
**characterised in that** the THz transceivers (5) each emit THz radiation (5) within a frequency range between 0.01 THz and 50 THz, in particular 0.05 THz and 20 THz, in particular, fully electronically, e.g. using frequency modulation or pulsed radiation.

7. Measuring system (2) according to one of the above claims,
**characterised in that** the THz transceivers (5) each emit the THz transmission beam (6) with a transmission cone (7),
where at least the transmission cones (7) of adjacent THz transceivers (5) overlap, at least in part, up to the axis of symmetry (B) of the measuring system (2) and/or up to the measured object (3).

8. Measuring system (2) according to one of the above claims,
**characterised in that** the several measuring signals (S1) are evaluated by the SAR evaluation process with overlap or combination of the amplitudes and the phase positions, in particular for simulating a phased array antenna with a larger aperture,
preferably while measuring a run time difference as phase difference.

9. Measuring arrangement (1), comprising a measuring system (2) according to one of the above claims in the axis of symmetry (B) of which a measured object (3), e.g. a plastic profile, is arranged which has a longitudinal axis extending along or in parallel with the axis of symmetry (B),
where the adjustment means (12) adjusts the antenna arrangement (4) around the measured object (3), preferably along a circular path.

10. Measuring arrangement (1) according to claim 9, **characterised in that** a conveying means is provided for conveying the measured object (3) along the axis of symmetry (B) or parallel to axis of symmetry, preferably using a conveying speed slower than the adjustment speed (m1, m2) of the antenna arrangement (4) in the adjustment direction (m1, m2).

11. Method for measuring a measured object (3), in particular a plastic profile (3), including at least the following steps:
providing or positioning an antenna arrangement (4) made of a plurality of THz transceivers (5) such that an optical axis (A) of the antenna arrangement is aligned with the measured object (3) and/or
perpendicular to an axis of symmetry (B) (St1),
carrying out a first THz measurement of the measured object (3) in the first measuring position (MP1), said plurality of THz transceivers (5) of the antenna matrix (4) each at times actively emitting a THz transmission beam (6) along or parallel to its optical axis (A) which is partially reflected from the measured object (3) back to the antenna arrangement (4) (St1),
said THz transceivers (5) at times passively detecting reflected THz radiation (11),
successively adjusting the antenna arrangement (4) along an adjustment direction (m1, m2) into several measuring positions (MP1, MP2...) in which the optical axis (A) is aligned with measured object (3) and/or perpendicular to the axis of symmetry (B) (St2), and
carrying out further THz measurements while putting out measuring signals (S1), (St3),
evaluating the measuring signals (S1) from said several measuring positions (MP1, MP2, MP3), where the measuring signals of the individual THz transceivers (5) are processed together by means of an SAR evaluation process and a virtual model (VM) of a cross-sectional area of the measured object (3) is determined (St4),
determining the reference surfaces (8) and layer thicknesses (d) as distances of the der reference surfaces (8) in the virtual model (VM) (St5).

12. Method according to claim 11, **characterised in that** the cone of radiation emitted (7) of the individual THz transceivers (5), in particular of adjacent THz transceivers (5), already overlap, at least in part, before the measured object (3), and/or
the cone of radiation emitted (7) of the measurements in the several measuring positions (MP1, MP2...) overlap, at least in part,
so as to form a superimposition for the SAR evaluation process.

13. Method according to one of the claims 11 through 12, **characterised in that** the THz transceivers (5) each emit the THz transmission beam (5) through the measured object (3) with partial reflection on the several boundary surfaces (8) of the measured object (3).

14. Method according to one of the claims 11 through 13, **characterised in that** the measuring signals (S1) are subsequently assembled from MIMO measurements in each measuring position (MP1, MP2) by means of an SAR computation method so as to form partial sections of a virtual model and, here from, the entire virtual model (VM) of the measured object (3), where then the layer thicknesses (d) are subsequently determined from the virtual model (VM).

15. Method for manufacturing a plastic profile (3), including the following steps:
extruding the plastic profile (3) along or parallel with an axis of symmetry (B),
measuring a cross-section of the plastic profile (3) by means of a method according to one of the claims 11 through 15, determining a reference thickness (d_ref), e.g. a reference thickness of an irregular sealing lip (16) of the plastic profile (3),
putting out a control signal (S3) to an extruder (18), for regulating the formed reference thickness (d_Ref) by measuring the plastic profile (3), creating the virtual model (VM), comparing the reference thickness (d_ref) of the virtual model (VM) to a target value and altering the extrusion parameters by means of the control signal (S3) depending on the comparison.

## Revendications

1. Système de mesure (2) destiné à mesurer un objet à mesurer, en particulier un profilé en matière plastique (3), le système de mesure (2) présentant :
un agencement d'antennes (4) à partir de plusieurs émetteurs-récepteurs térahertz (5) qui émettent respectivement de façon temporaire et active un rayonnement d'émission térahertz (6) et reçoivent de façon temporaire un rayonnement térahertz (11) réfléchi passivement,
l'agencement d'antennes (4) émettant des signaux de mesure (S1) des émetteurs-récepteurs térahertz (11),
un dispositif de réglage (12) destiné à déplacer l'agencement d'antennes (4) vers plusieurs positions de mesures (MP1, MP2, MP3) le long d'une direction de réglage (m1, m2),
un dispositif de commande et d'évaluation (14) destiné à recevoir et évaluer des signaux de mesure (S1), ledit dispositif étant conçu de façon que les signaux de mesure (S1) des plusieurs émetteurs-récepteurs térahertz (5) dans les plusieurs positions de mesure (MP1, MP2, ...) sont évalués par un procédé d'évaluation SAR et qu'un modèle virtuel (VM) des surfaces limites (8) de l'objet à mesurer (3) est formé, et
ensuite le dispositif de commande et d'évaluation (14) détermine à partir du modèle virtuel (VM) des épaisseurs de couches (d) entre les surfaces limites (8).

2. Système de mesure suivant la revendication 1, **caractérisé en ce que** ledit système de mesure (2) inclut une trajectoire périphérique, en particulier une trajectoire circulaire entière ou partielle (m2), et
le dispositif de réglage (12) fait déplacer l'agencement d'antennes (4) le long de la trajectoire périphérique, autour d'un axe de symétrie (B) du système de mesure (2),
lors des lectures dans les différentes positions de mesure (MP1, MP2,...) de la trajectoire périphérique, un axe optique principal (A) de l'agencement d'antennes (4) étant respectivement orienté par rapport à l'axe de symétrie (B).

3. Système de mesure (2) suivant une des revendications précédentes, **caractérisé en ce que** l'agencement d'antennes (4) présente une disposition bi-dimensionnelle, de préférence plane, d'émetteurs-récepteurs térahertz (5), en particulier avec un écart constant (a) entre les émetteurs-récepteurs térahertz (5), par exemple sous la forme d'un commutateur croisé (4).

4. Système de mesure (2) suivant une des revendications précédentes, **caractérisé en ce que** l'émetteur-récepteur térahertz (5) qui émet actuellement de façon active le rayon d'émission térahertz (6), détecte également le rayonnement térahertz (11) réfléchi.

5. Système de mesure (2) suivant une des revendications précédentes, **caractérisé en ce que** les émetteurs-récepteurs térahertz (5) détectent respectivement sur des surfaces limites (8) d'un objet à mesurer (3) un rayonnement térahertz (11) réfléchi sous la forme de pointes de mesure.

6. Système de mesure (2) suivant une des revendications précédentes, **caractérisé en ce que** les émetteurs-récepteurs térahertz (5) émettent respectivement un rayon d'émission térahertz (6) dans la plage de fréquence comprise entre 0,01 térahertz à 50 térahertz, en particulier entre 0,05 térahertz à 20 térahertz, notamment de façon entièrement électronique, par exemple, au moyen d'une modulation de fréquence ou d'un rayonnement pulsé.

7. Système de mesure (2) suivant une des revendications précédentes, **caractérisé en ce que** les émetteurs-récepteurs térahertz (5) émettent respectivement le rayon d'émission térahertz (6) au moyen d'un cône d'émission (7), au moins les cônes d'émission (7) d'émetteurs-transmetteurs térahertz (5) voisins se chevauchant au moins partiellement jusqu'à l'axe de symétrie (B) du système de mesure (2) et/ou jusqu'à l'objet à mesurer (3).

8. Système de mesure (2) suivant une des revendications précédentes,
**caractérisé en ce que** les plusieurs signaux de mesure (S1) sont évalués au moyen du procédé d'évaluation SAR par superposition ou combinaison des amplitudes et position de phase, en particulier pour la simulation d'une antenne à réseau piloté avec une plus grande ouverture, de préférence par mesure des différences de temps de propagation en tant que différence de phase.

9. Dispositif de mesure (1) qui présente un système de mesure (2) suivant une des revendications précédentes, dans l'axe de symétrie (B) duquel est disposé un objet à mesurer (3), par exemple un profilé en plastique avec un axe longitudinal s'étendant le long ou parallèlement à l'axe de symétrie (B), le dispositif de réglage (12) déplaçant l'agencement d'antennes (4) autour de l'objet à mesurer (3), de préférence sur une trajectoire circulaire.

10. Agencement de mesure (1) suivant la revendication 9, **caractérisé en ce qu'**un moyen de convoyage est prévu pour déplacer l'objet à mesurer (3) le long de l'axe de symétrie (B) ou parallèlement à celui-ci, de préférence avec une vitesse de déplacement inférieure à la vitesse de déplacement de l'agencement d'antennes (4) dans le sens de réglage (m1, m2).

11. Procédé destiné à mesurer un objet à mesurer (3), en particulier d'un profilé en plastique (3), ledit procédé comprenant au moins les étapes suivantes :
mise à disposition ou positionnement d'un agencement d'antennes (4) à partir de plusieurs émetteurs-récepteurs térahertz (5) de façon qu'un axe optique (A) de l'agencement d'antennes est orienté vers l'objet à mesurer (3) et/ou perpendiculairement à l'axe de symétrie (B) (St1),
réalisation d'une première mesure térahertz de l'objet à mesurer (3) dans la première position de mesure (MP1), les plusieurs émetteurs-récepteurs térahertz (5) de l'agencement d'antennes (4) émettant respectivement de façon active un rayon d'émission térahertz (6) le long ou parallèlement à son axe optique (A) qui est partiellement réfléchi en retour vers l'agencement d'antennes (4) (St(1),
les émetteurs-détecteurs térahertz (5) détectant temporairement un rayonnement térahertz (11) réfléchi passivement,
le réglage successif de l'agencement d'antennes (4) le long d'une direction déplacement (m1, m2) vers plusieurs positions de mesure (MP1, MP2...), dans lesquelles l'axe optique (A) est orienté vers l'objet à mesurer (3) et/ou perpendiculairement à l'axe de symétrie (B), (St2) et
la réalisation d'autres mesures térahertz par émission de signaux de mesure (S1), (St3),
évaluation des signaux de mesure (S1) à partir des plusieurs positions de mesure (MP1, MP2, MP3), les signaux de mesure des émetteurs-transmetteurs térahertz individuels (5) étant traités ensemble au moyen d'un procédé d'évaluation SAR et un modèle virtuel (VM) d'une zone de section transversale de l'objet à mesurer (3) étant déterminé (St4),
détermination des surfaces limites (8) et épaisseurs de couches (d) en tant qu'écarts des surfaces limites (8) dans le modèle virtuel (VM) (St5).

12. Procédé suivant la revendication 11, **caractérisé en ce que** des cônes d'émission (7) des émetteurs-transmetteurs térahertz (5) individuels, en particulier d'émetteurs-transmetteurs térahertz (5) voisins, se chevauchent partiellement déjà devant l'objet à mesurer (3), et/ou
les cônes d'émission (7) des mesures se chevauchent au moins partiellement dans les plusieurs positions de mesure (MP1, MP2...) pour former une superposition pour le procédé d'évaluation SAR.

13. Procédé suivant une des revendications 11 à 12, **caractérisé en ce que** les émetteurs-transmetteurs térahertz (5) émettent le rayon d'émission térahertz (6) à travers l'objet à mesurer (3) par réflexion partielle sur les plusieurs surfaces limites (8) de l'objet à mesurer (3).

14. Procédé suivant une des revendications 11 à 13 , **caractérisé en ce que** dans chaque position de mesure (MP1, MP2), les signaux de mesure (S1) de mesures MIMO sont ensuite composés par un procédé de calcul SAR pour former des sections partielles d'un modèle virtuel et à partir de celles-ci l'ensemble du modèle virtuel (VM) de l'objet à mesurer (3), les épaisseurs de couches (d) étant ensuite déterminées à partir du modèle virtuel (VM).

15. Procédé de fabrication d'un profilé en plastique (3) comprenant les étapes suivantes :
extrusion d'un profilé en plastique (3) le long d'un axe de symétrie (B) ou parallèlement à celui-ci,
mesure d'une section transversale du profilé en plastique (3) au moyen d'un procédé suivant une des revendications 11 à 14, en déterminant une épaisseur de référence (d_ref), par exemple une épaisseur de référence d'une lèvre d'étanchéité irrégulière (16) du profilé en plastique (3),
émission d'un signal de commande (S3) vers une extrudeuse (18) pour le réglage de l'épaisseur de référence (d_Ref) formée en mesurant le profilé en plastique (3), établissement d'un modèle virtuel (VM), comparaison de l'épaisseur de référence (d_ref) du modèle virtuel (VM) avec une valeur de consigne et modification des paramètres d'extrusion par le signal de commande (S3) en fonction de la comparaison.
